# FASCICULE DE BREVET EUROPEEN

(11) **EP 2 184 835 B1**
(45) Date de publication et mention de la délivrance du brevet: **20.07.2016**
(21) Numéro de dépôt: 09172435.1
(22) Date de dépôt: 07.10.2009
(51) Int. Cl.: H02K 3/38, H02K 3/50, H02K 5/10, H02K 5/20

(54) **Machine électrique tournante**
Elektrische umlaufende Maschine
Rotating electrical machine

(30) Priorité: 05.11.2008 FR 0857508; 05.11.2008 FR 0857511
(43) Date de publication de la demande: 12.05.2010
(73) Titulaire: VALEO EQUIPEMENTS ELECTRIQUES MOTEUR, 94046 Créteil Cedex (FR)
(72) Inventeur: El Baraka, Khadija, 77600, Bussy St Georges (FR); Fakes, Michel, 59113, Seclin (FR); Ben Omrane, Ryadh, 94550, Chevilly-Larue (FR); Masfaraud, Julien, 75010, Paris (FR); Even, Denis, 75012, Paris (FR); Bodin, Denis, 62280, Saint Martin Boulogne (FR); Jugovic, Sveltislav, 37300, Joue-Les-Tours (FR)
(74) Mandataire: de Lambilly Delorme, Marie Pierre

(56) Documents cités:
- EP-A- 0 881 752
- EP-A- 1 876 685
- WO-A-2005/064769
- WO-A-2008/027535
- FR-A- 2 780 828
- FR-A- 2 904 489
- US-A- 5 508 571
- US-A1- 2007 278 875

## Description

L'invention concerne notamment une machine électrique tournante, en particulier un alternateur ou un alterno-démarreur pour véhicule automobile.

On connaît par le brevet US 7 170 210 un alternateur comportant un stator pourvu d'un bobinage électrique formant plusieurs phases. Des entrées de phase sont formées sur des barres conductrices.

Sur certaines machines électriques, il peut arriver que des points neutres ou des sorties ou entrées de phases du bobinage de stator soient situées très proche d'un palier de la machine. Ceci peut augmenter le risque de contact électrique accidentel entre un conducteur du bobinage et le palier.

On connaît par la demande de brevet FR 2 780 828 un alternateur comportant un carter, un bobinage de stator et une pièce électriquement isolante interposée entre le carter et le bobinage.

On connaît par la demande de brevet FR 2 904 489 un dispositif et un procédé pour maintenir le point neutre d'une machine électrique tournante triphasée comportant au moins un bobinage connecté en étoile.

L'invention vise notamment à proposer un nouveau type de protection de conducteurs du bobinage de stator vis-à-vis d'un palier de la machine.

L'invention a ainsi pour objet une machine électrique tournante, notamment un alternateur ou un alterno-démarreur pour véhicule automobile, comportant :
- au moins un palier pourvu d'au moins une ouverture débouchant à l'extérieur du palier,
- un stator comprenant un bobinage électrique, ce bobinage comportant une pluralité de conducteurs électriques et l'un au moins de ces conducteurs comprenant une extrémité formant un point neutre électrique du bobinage,
- un organe d'isolation électrique agencé pour empêcher un éventuel contact entre le palier et ladite extrémité de conducteur formant point neutre, cet organe d'isolation s'étendant au moins partiellement à travers l'ouverture du palier et étant au moins partiellement à l'extérieur du palier.

Selon un aspect de l'invention, l'organe d'isolation électrique est avantageusement agencé pour être au moins partiellement en appui sur une surface extérieure du palier.

Dans un exemple de mise en oeuvre de l'invention, l'organe d'isolation électrique présente une forme sensiblement annulaire.

L'organe d'isolation électrique peut présenter une forme annulaire fermée ou, en variante, interrompue.

De préférence, l'organe d'isolation comporte au moins une languette s'étendant au moins partiellement à travers l'ouverture du palier et agencée pour empêcher un éventuel contact entre le palier et ladite extrémité de conducteur formant point neutre.

De préférence, l'organe d'isolation comporte une pluralité de languettes avantageusement réparties de manière sensiblement régulière le long d'un arc de cercle sur l'organe d'isolation.

Dans un exemple de mise en oeuvre de l'invention, l'organe d'isolation comporte autant de languettes d'isolation que de points neutres du bobinage, ce nombre étant par exemple égal à sept.

Le cas échéant, la languette d'isolation comporte une base sensiblement demi-cylindrique se raccordant à une face plane de l'organe d'isolation, de préférence de manière inclinée par rapport à cette face plane en formant un angle avantageusement non nul.

L'organe d'isolation peut comporter au moins une encoche agencée pour recevoir une extrémité de conducteur formant sortie de phase, cette encoche étant notamment ouverte sur un pourtour extérieur de l'organe d'isolation.

L'organe d'isolation est par exemple réalisé en matière plastique.

Avantageusement l'organe d'isolation est agencé pour boucher au moins partiellement, notamment à l'aide d'une portion radialement en saillie, au moins une ouverture, notamment une pluralité d'ouvertures, du palier.

L'organe d'isolation peut, le cas échéant, boucher entièrement au moins une ouverture du palier.

Ceci peut permettre de limiter des échanges d'air axiaux, notamment par recirculation, dans la machine au niveau d'une unité électronique fixée sur le palier, afin d'abaisser la température de l'unité électronique et ainsi d'accroître les performances de la machine.

Dans un exemple de mise en oeuvre de l'invention, l'organe d'isolation comporte au moins une patte d'encliquetage agencée pour permettre la fixation de cet organe d'isolation sur le palier.

Le cas échéant, la machine peut comporter au moins une unité électronique équipée d'un dissipateur de chaleur pourvu d'ailettes, et l'organe d'isolation comporte au moins une rainure permettant d'y engager au moins partiellement une ailette du dissipateur de chaleur.

Ceci peut permettre de rendre le produit compatible mécaniquement avec différents types de fixation disponibles sur des paliers.

Par exemple la rainure est formée entre deux pattes élastiquement déformables, ces pattes s'étendant notamment sur une face extérieure de l'organe d'isolation.

Dans un exemple de mise en oeuvre de l'invention, l'organe d'isolation comporte un rebord, notamment sensiblement cylindrique, s'étendant sensiblement dans le prolongement d'une paroi cylindrique d'un capot de la machine.

L'invention a également pour objet une machine électrique tournante, notamment un alternateur ou un alterno-démarreur, comportant :
- un stator comprenant un bobinage électrique, ce bobinage comportant une pluralité de conducteurs électriques et l'un au moins de ces conducteurs comprenant une extrémité formant un point neutre électrique du bobinage,
- un organe d'isolation électrique agencé pour coiffer l'extrémité de conducteur formant point neutre, cet organe étant notamment disposé dans un espace intérieur défini entre des paliers de la machine.

L'organe d'isolation peut comporter au moins une coiffe, notamment formée par un renfoncement dans une bande isolante par exemple sensiblement en forme d'arc de cercle, pour coiffer l'extrémité de conducteur formant point neutre.

Ce renfoncement peut présenter par exemple une forme en cuvette.

Avantageusement l'organe d'isolation comporte une pluralité de coiffes réparties sur la bande isolante.

Dans un exemple de mise en oeuvre de l'invention, l'extrémité de conducteur formant point neutre est soudée à une barre électriquement conductrice, et l'organe d'isolation électrique vient coiffer l'extrémité de conducteur formant point neutre et une portion au moins de la barre conductrice.

Par exemple le bobinage du stator comporte une pluralité de conducteurs de type épingle.

Ce bobinage de stator peut être de type en étoile.

Dans un exemple de mise en oeuvre de l'invention, le bobinage de stator est de type heptaphasé, avec notamment sept points neutres.

L'invention a encore pour objet un organe d'isolation électrique d'une machine telle que définie ci-dessus.

L'invention concerne également une machine électrique tournante, notamment un alternateur ou un alterno-démarreur, comportant :
- un stator comprenant un bobinage électrique, ce bobinage comportant une pluralité de conducteurs électriques et l'un au moins de ces conducteurs comprenant une extrémité formant un point neutre électrique du bobinage,
- une coiffe isolante agencée pour coiffer l'extrémité de conducteur formant point neutre, cette coiffe étant agencée pour pouvoir être mise en place depuis l'extérieur de paliers de la machine, à travers une ouverture de l'un de ces paliers.

Dans un exemple de mise en oeuvre de l'invention, les extrémités de conducteur formant points neutres sont coiffées chacune par une coiffe individuelle.

L'invention concerne encore un procédé pour fabriquer une machine électrique tournante telle définie plus haut, comportant l'étape suivante :
- coiffer l'extrémité de conducteur formant point neutre avec une coiffe électriquement isolante mise en place depuis l'extérieur de paliers de la machine, à travers une ouverture de l'un de ces paliers.

L'invention a pour objet, selon un autre de ses aspects, une machine électrique tournante, notamment un alternateur ou un alterno-démarreur pour véhicule automobile, comportant :
- un stator comprenant un bobinage électrique, ce bobinage comportant une pluralité de conducteurs électriques et deux au moins de ces conducteurs comprenant chacun une extrémité formant par exemple un point neutre électrique du bobinage,
- un organe de connexion électrique agencé pour permettre de relier électriquement deux points, notamment deux points neutres, du bobinage du stator, cet organe de connexion électrique comportant au moins un élément électriquement conducteur partiellement noyé, notamment par surmoulage, dans une matière électriquement isolante.

Grâce à l'invention, la liaison électrique entre les deux points du bobinage peut être relativement robuste.

Dans un exemple de mise en oeuvre de l'invention, l'organe de connexion comporte une couronne réalisée dans la matière électriquement isolante.

Le cas échéant, l'organe de connexion électrique comporte une pluralité d'éléments conducteurs, chacun présentant sensiblement une forme en U, au moins deux de ces éléments conducteurs voisins formant un espace pour l'insertion d'une extrémité de conducteur formant un point neutre électrique du bobinage.

Ceci peut permettre de rendre bien accessible une soudure des éléments conducteurs.

Avantageusement l'extrémité de conducteur formant un point neutre électrique du bobinage est soudée, notamment par soudo-brasage par résistance ou par arcs électriques ou par brasage tendre ou par laser, aux éléments conducteurs adjacents de l'organe de connexion électrique.

De préférence, les éléments conducteurs de l'organe de connexion électrique comportent chacun au moins un chanfrein en regard du bobinage de stator agencé pour faciliter l'insertion d'une extrémité de conducteur formant un point neutre électrique du bobinage.

Ceci peut permettre de former un guide d'insertion du conducteur, par exemple de forme en cône.

Dans un exemple de mise en oeuvre de l'invention, l'organe de connexion électrique comporte au moins une fente, débouchant notamment sur un pourtour intérieur de cet organe de connexion, cette fente étant agencée pour recevoir au moins partiellement l'extrémité de conducteur formant un point neutre électrique du bobinage.

Si on le souhaite, l'organe de connexion présente un pourtour intérieur sensiblement circulaire, et ladite fente forme avec un diamètre de l'organe de connexion un angle non nul. Cette inclinaison de la fente peut être avantageuse notamment pour le passage d'un outil de soudure du conducteur du bobinage.

En variante, l'organe de connexion présente un pourtour intérieur sensiblement circulaire, et ladite fente s'étend parallèlement à un diamètre de l'organe de connexion.

Dans un exemple de mise en oeuvre de l'invention, l'organe de connexion électrique comporte au moins un orifice, notamment réalisé dans une couronne électriquement isolante, agencé pour permettre le passage d'une portion de conducteur électrique du bobinage de stator, cette portion de conducteur formant avantageusement une entrée ou une sortie de phase du bobinage de stator. Ceci peut être avantageux pour rigidifier le pied de la portion de conducteur traversant l'orifice.

Si on le souhaite, les éléments conducteurs de l'organe de connexion sont réalisés en cuivre.

Avantageusement les éléments conducteurs de l'organe de connexion sont noyés dans la matière plastique sur une majeure partie de leur longueur.

L'organe de connexion électrique peut par exemple être posée sur un sommet d'un chignon du bobinage de stator.

L'invention peut ainsi permettre une isolation thermique satisfaisante.

De préférence l'organe de connexion bouche au moins partiellement une ouverture d'aération d'un palier de la machine, afin notamment de limiter des échanges d'air axiaux entre l'intérieur des paliers et l'arrière d'une unité électronique de la machine.

L'invention concerne également un organe de connexion électrique notamment pour une machine telle que définie plus haut, cet organe de connexion électrique étant avantageusement agencé pour permettre de relier électriquement deux points neutres d'un bobinage de stator, cet organe de connexion électrique comportant au moins un élément électriquement conducteur partiellement noyé, notamment par surmoulage, dans une matière électriquement isolante.

L'invention a également pour objet une machine électrique tournante, notamment un alternateur ou un alterno-démarreur pour véhicule automobile, comportant :
- un stator comprenant un bobinage électrique, ce bobinage comportant une pluralité de conducteurs électriques et deux au moins de ces conducteurs comprenant chacun une extrémité formant un point neutre électrique du bobinage,
- un organe de connexion électrique agencé pour permettre de relier électriquement deux points neutres du bobinage du stator, cet organe de connexion électrique comportant au moins une bande électriquement conductrice, cette bande conductrice étant nue, en étant dépourvue de revêtement électriquement isolant ou étant émaillée et localement dénudée.

Avantageusement la bande conductrice comporte au moins une portion en U permettant la mise en contact avec une extrémité formant un point neutre électrique du bobinage.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, en coupe longitudinale, un alternateur conforme à un exemple de mise en oeuvre de l'invention,
- la figure 2 illustre, schématiquement et partiellement, la machine de la figure 1, avec un organe d'isolation électrique conforme à un exemple de mise en oeuvre de l'invention,
- la figure 3 représente, schématiquement et partiellement, de manière isolée, l'organe d'isolation de la figure 2,
- la figure 4 représente, schématiquement et partiellement, en coupe suivant IV-IV, l'organe d'isolation de la figure 3,
- la figure 5 représente, schématiquement et partiellement, en perspective, un détail de l'organe d'isolation de la figure 2, coopérant avec un ailette d'un dissipateur de chaleur,
- la figure 6 représente, schématiquement et partiellement, un organe de connexion électrique mis en place sur un bobinage de stator conforme à un exemple de mise en oeuvre de l'invention,
- les figures 7 et 8 représentent, schématiquement et partiellement, de manière isolée, suivant deux vues différentes, l'organe de connexion selon la figure 6,
- les figures 9 et 10 sont des vues schématiques et partielles, en coupe respectivement suivant IX-IX et X-X, de l'organe de connexion des figures 7 et 8,
- la figure 11 illustre schématiquement et partiellement l'utilisation d'un outil de soudure sur l'ensemble de la figure 6,
- la figure 12 représente schématiquement et partiellement un organe de connexion électrique selon autre exemple de mise en oeuvre de l'invention, et
- les figures 13 et 14 représentent, schématiquement et partiellement, deux autres exemples de mise en oeuvre de l'invention pour un organe de connexion.

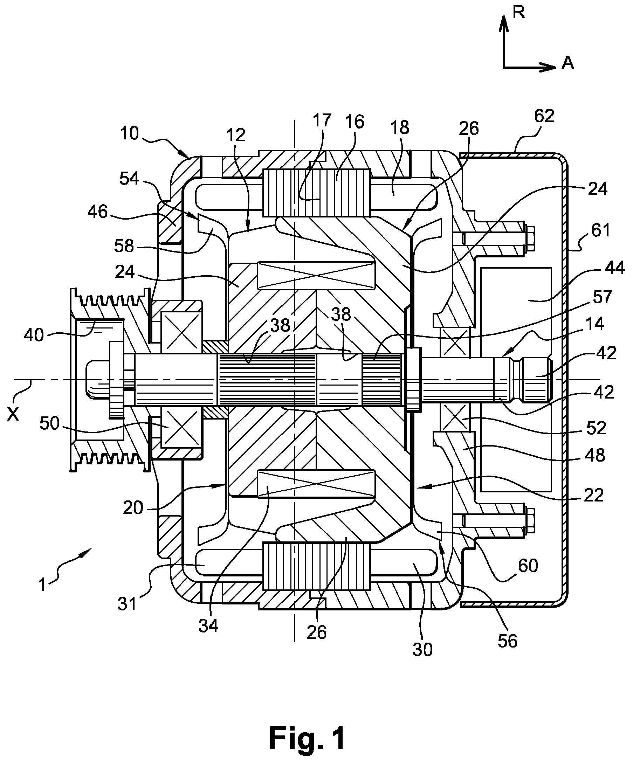

Dans la suite de la description, les flèches "A" et "R" de la figure 1 indiquent respectivement des directions axiale et radiale.

On a représenté sur la figure 1 une machine électrique tournante polyphasée 1 formant, dans le présent exemple de mise en oeuvre de l'invention, un alternateur pour véhicule automobile.

Bien entendu, la machine électrique 1 peut, si on le souhaite, être réversible et former un alterno-démarreur pouvant fonctionner en mode moteur électrique pour démarrer le moteur à combustion du véhicule et en mode alternateur pour produire de l'énergie électrique.

Cette machine 1 comporte un carter 10 et, à l'intérieur de celui-ci, un rotor 12 solidaire en rotation d'un arbre rotatif 14 d'axe X, appelé arbre de rotor, et un stator 16 qui entoure le rotor 12.

Le stator 16 comporte un corps 17 formé d'un paquet de tôles doté d'encoches pour le montage d'un bobinage de stator 18 formant des chignons 30 et 31 de part et d'autre du corps de stator 17.

Le rotor 12 comprend deux roues polaires 20 et 22, pourvues chacune d'un flasque transversal 24 sur la périphérie duquel se raccordent une pluralité de griffes 26 s'étendant sensiblement suivant la direction axiale A.

Les griffes 26 d'une roue polaire forment avec les griffes 26 de l'autre roue polaire des espaces interpolaires agencés pour recevoir chacun une structure à aimant, non représentée.

Un bobinage d'excitation 34 est mis en place entre les flasques 24 des roues polaires 20 et 22.

Chaque roue polaire 20 ; 22 comporte un alésage formant un passage intérieur 38 pour recevoir l'arbre 14.

Les roues polaires 20 et 22 sont réalisées par exemple en acier.

L'arbre 14 porte à son extrémité avant une poulie 40 appartenant à un dispositif de transmission de mouvement par l'intermédiaire d'au moins une courroie (non représentée) entre l'alternateur 1 et le moteur à combustion du véhicule automobile, et à son extrémité arrière des bagues collectrices 42 reliées par des liaisons filaires (non représentées) au bobinage d'excitation 34 du rotor 12.

Des balais d'un porte-balais 44 représenté de manière très schématique sont disposés de façon à frotter sur les bagues collectrices 42, afin d'alimenter le bobinage 34 en courant électrique.

Lorsque l'arbre 14 est en rotation et le bobinage d'excitation 34 activé par une alimentation électrique, le rotor inducteur 12 crée un courant induit alternatif dans le stator 16.

Le carter 10 comporte, dans l'exemple considéré, deux parties, à savoir un palier avant 46 et un palier arrière 48 portant le porte-balais 44.

Les paliers 46 et 48 portent chacun un roulement à billes respectivement 50 et 52 pour le montage à rotation de l'arbre 14.

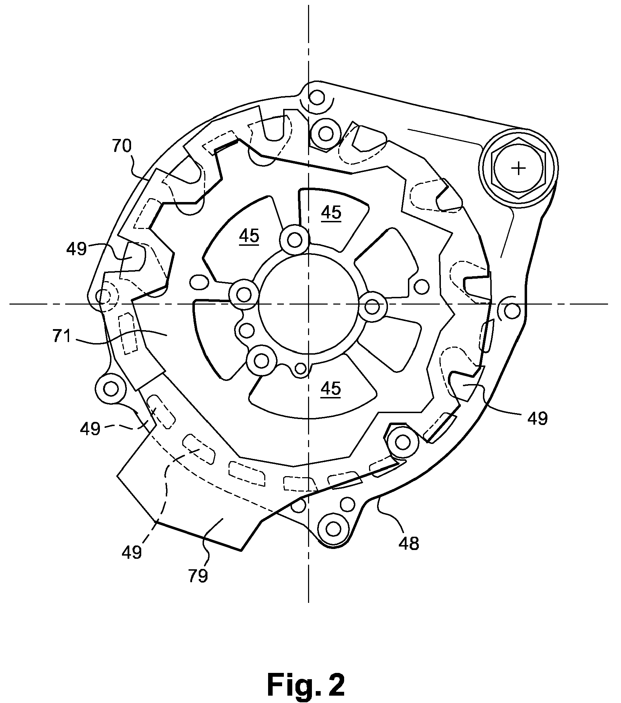

Comme on peut le voir sur la figure 2 notamment, les paliers 46 et 48 sont pourvus d'ouvertures 45 radialement intérieures et 49 radialement extérieures pour notamment permettre le passage d'air de refroidissement au sein de la machine.

Le palier arrière 48 est coiffé par un capot de protection 61. Ce dernier comporte une jupe latérale cylindrique 62 s'étendant suivant l'axe X.

Le rotor 12 porte, dans l'exemple décrit, au moins à l'une de ses extrémités axiales un ventilateur destiné à assurer une circulation de l'air. Un premier élément de ventilation 54 est par exemple prévu sur la face transversale avant du rotor 12 et un deuxième élément de ventilation 56 est prévu sur la face arrière du rotor 12. Chaque élément de ventilation 54 et 56 est pourvu d'une pluralité de pales 58 et 60.

Dans l'exemple décrit, le bobinage 18 du stator 16 est de type heptaphasé, à savoir présente sept phases, avec sept points neutres.

En variante, le bobinage 18 peut présenter un nombre de phases différent, par exemple trois, cinq ou six.

Le bobinage 18 est formé, dans l'exemple décrit, par une pluralité de conducteurs de type épingle.

En variante, le bobinage 18 peut être formé par une pluralité de fils électriquement conducteurs.

Les points neutres du bobinage 18 sont formés sur des extrémités de conducteurs du bobinage 18.

Selon un premier aspect de l'invention, comme illustré sur les figures 2 à 5, un organe d'isolation électrique 70 est prévu pour empêcher un éventuel contact électrique entre le palier arrière 48 les extrémités de conducteur formant points neutres.

Cet organe d'isolation 70 s'étend partiellement à travers des ouvertures 49 radialement extérieures du palier arrière 48.

Cet organe d'isolation électrique 70 est posé en appui sur une surface extérieure 71 du palier arrière 48.

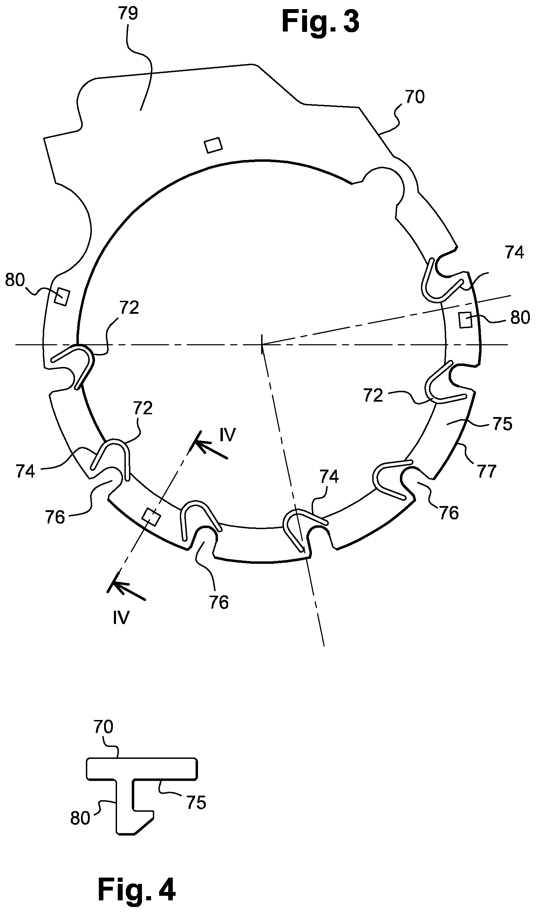

Comme on peut le voir sur les figures 2 et 3 notamment, l'organe d'isolation électrique 70 présente une forme sensiblement annulaire fermée.

Dans l'exemple décrit (voir figure 3 notamment), l'organe d'isolation 70 comporte une pluralité de languettes 72 s'étendant à travers des ouvertures 49 du palier 48 et agencée pour empêcher un éventuel contact entre le palier 48 et les extrémités de conducteur formant points neutres.

Ces languettes 72 sont réparties de manière sensiblement régulière le long d'un arc de cercle sur l'organe d'isolation 70.

L'organe d'isolation 70 comporte autant de languettes d'isolation 72 que de points neutres du bobinage, ce nombre étant égal à sept dans l'exemple décrit.

Chaque languette d'isolation 72 comporte une base 74 sensiblement demi-cylindrique se raccordant à une face plane 75 de l'organe d'isolation 70, de manière inclinée par rapport à cette face plane 75 en formant un angle non nul.

Cette forme enveloppante de chaque languette 72 permet une isolation sur environ 180° autour du conducteur formant point neutre.

L'organe d'isolation 70 comporte une pluralité d'encoches 76 agencées pour recevoir chacune une extrémité de conducteur formant sortie de phase, chaque encoche 76 étant ouverte sur un pourtour extérieur 77 de l'organe d'isolation 70.

L'organe d'isolation 70 est par exemple réalisé en matière plastique, par injection.

En outre l'organe d'isolation 70 est agencé pour boucher à l'aide d'une portion 79 radialement en saillie, des ouvertures 49 du palier arrière 48, comme on peut le voir sur la figure 2.

L'organe d'isolation 70 comporte une pluralité de pattes d'encliquetage 80 agencées pour permettre la fixation par encliquetage de cet organe d'isolation 70 sur le palier 48, comme illustré sur la figure 4.

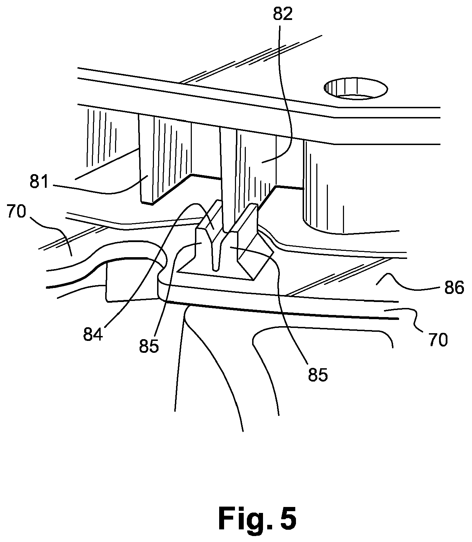

Lorsque la machine 1 comporte une unité électronique équipée d'un dissipateur de chaleur 81 pourvu d'ailettes 82 comme illustré sur la figure 5, l'organe d'isolation 70 peut comporter une rainure 84 permettant d'y engager partiellement une ailette 82 du dissipateur de chaleur 81.

La rainure 84 est formée entre deux pattes élastiquement déformables 85, ces pattes 85 s'étendant sur une face extérieure 86 de l'organe d'isolation 70.

Dans un exemple de mise en oeuvre non illustré, l'organe d'isolation 70 peut comporter un rebord cylindrique s'étendant sensiblement dans le prolongement de la jupe 62 du capot 61 de la machine 1.

Dans un exemple de mise en oeuvre de l'invention, l'organe d'isolation 70 peut comporter des protubérances s'étendant axialement à travers une ou plusieurs ouvertures d'aération 49, même si ces ouvertures n'entourent pas les extrémités de conducteur formant point neutre. Ces protubérances peuvent être sensiblement de la même forme que ces ouvertures d'aération 49 et leur épaisseur peut être choisie sensiblement égale à l'épaisseur du plateau du palier. Ces protubérances de préférence ne dépassent pas le diamètre extérieur de l'organe d'isolation 70.

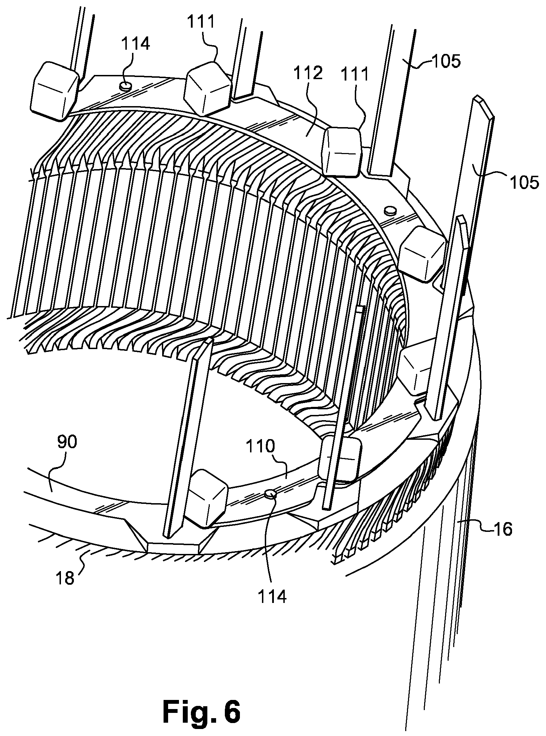

On a représenté sur les figures 6 à 11 un autre exemple de mise en oeuvre de l'invention.

Dans cet exemple, un organe de connexion électrique 90 est prévu pour permettre de relier électriquement plusieurs points neutres du bobinage 18 du stator 16.

Cet organe 90 permet également une isolation du bobinage du stator, ainsi qu'une obturation d'ouvertures du palier pour limiter des flux d'air axiaux.

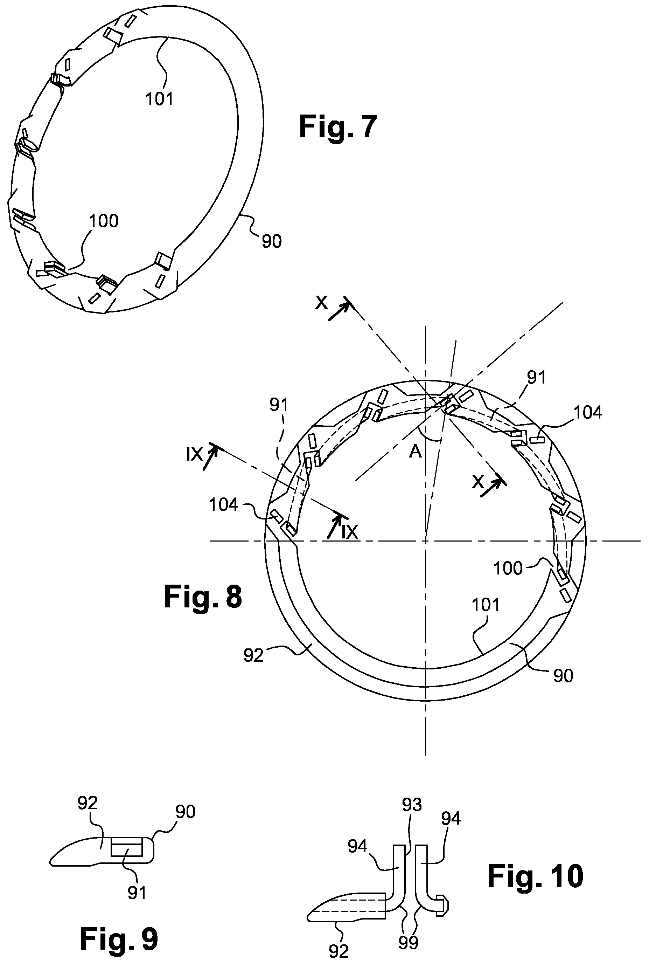

Cet organe de connexion électrique 90 comporte une pluralité d'éléments électriquement conducteurs 91 partiellement noyés par surmoulage dans une matière électriquement isolante 92, comme illustré sur les figures 8 et 9 notamment.

L'organe de connexion 90 comporte une couronne réalisée dans la matière électriquement isolante 92.

Chaque élément conducteur 91 présente sensiblement une forme en U.

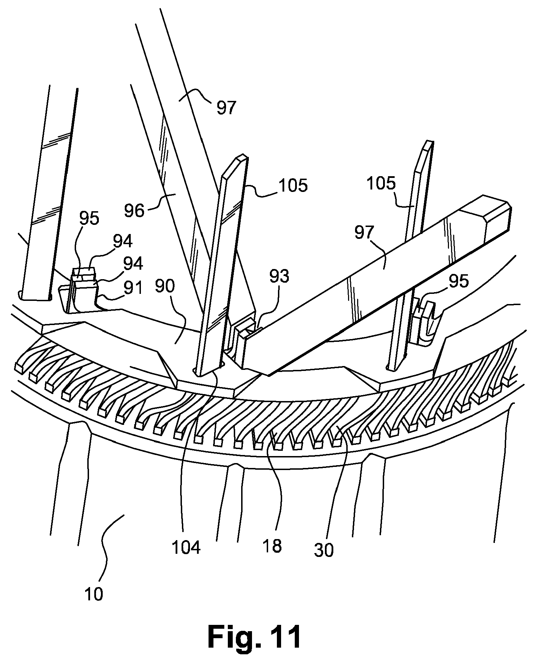

Chaque paire de deux de ces éléments conducteurs 91 voisins forme, entre des branches 94 d'extrémité du U, un espace 93 pour l'insertion d'une extrémité 95 de conducteur formant un point neutre électrique du bobinage 18, comme on peut notamment le voir sur la figure 11.

L'extrémité 95 de conducteur formant un point neutre électrique du bobinage est soudée, notamment par soudo-brasage par résistance ou par arcs électriques ou par brasage tendre ou par laser, aux éléments conducteurs 91 adjacents de l'organe de connexion électrique 70.

Comme illustré sur la figure 11, la soudure est réalisée par exemple l'aide d'un outil 96 pourvu de deux électrodes 97.

Les éléments conducteurs 91 de l'organe de connexion électrique 90 comporte chacun un chanfrein 99 en regard du bobinage 18 de stator 16 agencé pour faciliter l'insertion d'une extrémité 95 de conducteur formant un point neutre électrique du bobinage 18 (voir figure 10).

L'organe de connexion électrique 90 comporte une pluralité de fentes 100 débouchant sur un pourtour intérieur 101 de cet organe de connexion 90 (voir notamment figures 7 et 8).

Ces fentes 100 présentent par exemple une forme sensiblement rectangulaire.

Chaque fente 100 est agencée pour recevoir au moins partiellement l'extrémité 95 de conducteur formant un point neutre électrique du bobinage 18.

Le pourtour intérieur 101 est sensiblement circulaire, et chaque fente 100 forme avec un diamètre de l'organe de connexion 90 un angle A non nul (voir figure 8 par exemple).

L'angle A est par exemple choisi compris entre 10° et 90°, étant notamment proche de 45°.

Cette inclinaison A de la fente 100 est avantageuse pour le passage de l'outil de soudure 96.

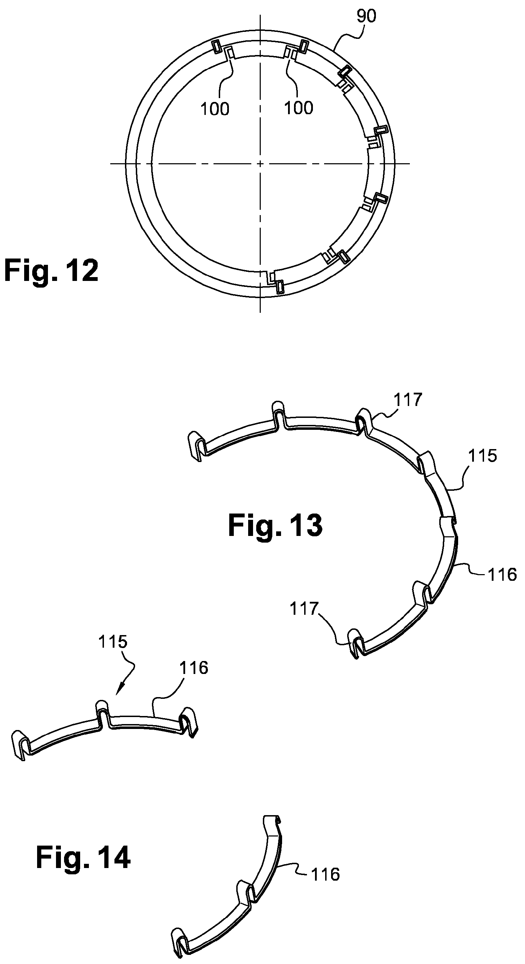

En variante, comme illustré sur la figure 12, chaque fente 100 peut s'étendre parallèlement à un diamètre de l'organe de connexion 90.

L'organe de connexion électrique 90 comporte une pluralité d'orifices 104, de forme rectangulaire, réalisés dans la couronne électriquement isolante 92, et agencés pour permettre le passage d'une portion 105 de conducteur électrique du bobinage 18 de stator 16.

Cette portion 105 de conducteur forme une entrée ou une sortie de phase du bobinage de stator.

Ceci peut être avantageux pour rigidifier le pied de la portion 105 de conducteur traversant l'orifice 104.

Les éléments conducteurs 91 de l'organe de connexion 90 sont réalisés en cuivre par exemple.

Comme illustré sur la figure 11, l'organe de connexion électrique 90 est posé sur le sommet du chignon 30 du bobinage 18 de stator 16.

Un organe d'isolation électrique 110 est prévu pour coiffer les extrémités 95 de conducteur formant points neutres insérées entre les conducteurs 91, comme illustré sur la figure 6.

Cet organe d'isolation 110 est disposé dans un espace intérieur défini entre des paliers 46 et 48 de la machine 1.

L'organe d'isolation 110 comporte une pluralité de coiffes 111 formées chacune par un renfoncement, en forme de cuvette, dans une bande isolante 112 sensiblement en forme d'arc de cercle.

Ceci permet une protection des points neutres soudés du bobinage, ainsi qu'une limitation des flux d'air axiaux.

Dans l'exemple décrit, l'organe d'isolation 110 est fixé sur l'organe de connexion 90 à l'aide de picots 114.

On a représenté sur les figures 13 et 14 deux exemples d'organes de connexion selon l'invention.

Dans l'exemple de la figure 13, l'organe de connexion électrique 115 est agencé pour permettre de relier électriquement tous les points neutres du bobinage 18 du stator.

Cet organe de connexion électrique 115 comporte une unique bande électriquement conductrice 116, cette bande conductrice étant nue, en étant dépourvue de revêtement électriquement isolant.

La bande conductrice 116 comporte une pluralité de portions 117 en U permettant chacune la mise en contact avec une extrémité 95 formant un point neutre électrique du bobinage 18.

Dans une variante de l'invention illustrée sur la figure 14, l'organe de connexion 115 comporte deux bandes conductrices 116 séparées prévues chacune pour trois connexions seulement.

## Revendications

1. Machine électrique tournante (1), notamment un alternateur ou un alterno-démarreur pour véhicule automobile, comportant :
- au moins un palier (48) pourvu d'au moins une ouverture (49) débouchant à l'extérieur du palier,
- un stator (16) comprenant un bobinage électrique (18), ce bobinage comportant une pluralité de conducteurs électriques et l'un au moins de ces conducteurs comprenant une extrémité (95) formant un point neutre électrique du bobinage,
- un organe d'isolation électrique (70) agencé pour empêcher un éventuel contact entre le palier (48) et ladite extrémité de conducteur formant point neutre , **caractérisée en ce que** cet organe d'isolation s'étendant au moins partiellement à travers l'ouverture du palier et étant au moins partiellement à l'extérieur du palier, cet organe d'isolation électrique étant en outre agencé pour être au moins partiellement en appui sur une surface extérieure (71) du plateau du palier,
- l'organe d'isolation (70) est agencé pour boucher au moins partiellement, à l'aide d'une portion (79) radialement en saillie, au moins une ouverture d'aération (49), notamment une pluralité d'ouvertures, du palier.

2. Machine selon la revendication précédente, **caractérisée par le fait qu'**un organe de connexion électrique (90) agencé pour permettre de relier électriquement deux points neutres du bobinage du stator, cet organe de connexion électrique comportant au moins un élément électriquement conducteur (91) partiellement noyé, notamment par surmoulage, dans une matière électriquement isolante (92), l'organe de connexion bouche au moins partiellement une ouverture d'aération (49) du palier.

3. Machine selon l'une des revendications précédentes, **caractérisée par le fait que** l'organe d'isolation comporte au moins une languette (72) s'étendant au moins partiellement à travers l'ouverture d'aération (49) du palier et agencée pour empêcher un éventuel contact entre le palier et ladite extrémité de conducteur formant point neutre et en ce que l'organe d'isolation est sensiblement annulaire.

4. Machine selon la revendication précédente, **caractérisée par le fait que** l'organe d'isolation comporte autant de languettes d'isolation (72) que de points neutres du bobinage, ce nombre étant par exemple égal à sept.

5. Machine selon l'une des deux revendications précédentes, **caractérisée par le fait que** la languette d'isolation (72) comporte une base (74) sensiblement demi-cylindrique se raccordant à une face plane de l'organe d'isolation, de préférence de manière inclinée par rapport à cette face plane (75) en formant un angle avantageusement non nul.

6. Machine selon l'une quelconque des revendications précédentes, **caractérisée par le fait que** l'organe d'isolation comporte au moins une encoche (76) agencée pour recevoir une extrémité de conducteur formant sortie de phase, cette encoche étant notamment ouverte sur un pourtour extérieur (77) de l'organe d'isolation.

7. Machine selon l'une quelconque des revendications précédentes, **caractérisée par le fait que** l'organe d'isolation comporte au moins une patte d'encliquetage (80) agencée pour permettre la fixation de cet organe d'isolation sur le palier.

8. Machine selon l'une quelconque des revendications précédentes, **caractérisée par le fait qu'**elle comporte au moins une unité électronique équipée d'un dissipateur de chaleur pourvu d'ailettes (82), et l'organe d'isolation comporte au moins une rainure permettant d'y engager au moins partiellement une ailette du dissipateur de chaleur.

9. Machine selon l'une des revendications précédentes, **caractérisée par le fait que** l'organe de connexion électrique comporte une pluralité d'éléments conducteurs (91), chacun présentant sensiblement une forme en U, au moins deux de ces éléments conducteurs voisins formant un espace (93) pour l'insertion d'une extrémité de conducteur formant un point neutre électrique du bobinage.

10. Machine selon la revendication précédente, **caractérisée par le fait que** l'extrémité (95) de conducteur formant un point neutre électrique du bobinage est soudée, notamment par soudo-brasage par résistance ou par arcs électriques ou par brasage tendre ou par laser, aux éléments conducteurs adjacents de l'organe de connexion électrique.

11. Machine selon l'une quelconque des revendications précédentes, **caractérisée par le fait que** l'organe de connexion électrique (90) comporte au moins une fente (100), débouchant notamment sur un pourtour intérieur (101) de cet organe de connexion, cette fente étant agencée pour recevoir au moins partiellement l'extrémité de conducteur formant un point neutre électrique du bobinage.

12. Machine selon la revendication précédente, l'organe de connexion présentant un pourtour intérieur sensiblement circulaire, **caractérisée par le fait que** ladite fente (100) forme avec un diamètre de l'organe de connexion un angle (A) non nul.

13. Machine selon l'une quelconque des revendications précédentes, **caractérisée par le fait que** l'organe de connexion électrique comporte au moins un orifice (104), notamment réalisé dans une couronne électriquement isolante, agencé pour permettre le passage d'une portion de conducteur électrique du bobinage de stator, cette portion de conducteur formant avantageusement une entrée ou une sortie de phase du bobinage de stator.

## Patentansprüche

1. Elektrische umlaufende Maschine (1), insbesondere ein Wechselstromgenerator oder Starter-Generator für Kraftfahrzeug, die Folgendes umfasst:
- mindestens ein Lager (48), das mit mindestens einer Öffnung (49), die außerhalb des Lagers mündet, versehen ist,
- einen Stator (16), der eine elektrische Wicklung (18) umfasst, wobei diese Wicklung eine Vielzahl elektrischer Leiter umfasst und mindestens einer dieser Leiter ein Ende (95) umfasst, das einen elektrischen Nullpunkt der Wicklung bildet,
- ein elektrisches Isolationsorgan (70), das eingerichtet ist, um einen eventuellen Kontakt zwischen dem Lager (48) und dem Ende des Leiters, der den Nullpunkt bildet, zu verhindern, **dadurch gekennzeichnet, dass** sich dieses Isolationsorgan mindestens teilweise durch die Öffnung des Lagers erstreckt, und, indem es mindestens teilweise außerhalb des Lagers ist, wobei dieses elektrische Isolationsorgan außerdem eingerichtet ist, um mindestens teilweise auf einer äußeren Oberfläche (71) der Platte des Lagers aufzuliegen,
- wobei das Isolationsorgan (70) eingerichtet ist, um mit Hilfe eines radial vorstehenden Abschnitts (79) mindestens eine Belüftungsöffnung (49), insbesondere eine Vielzahl von Öffnungen des Lagers mindestens teilweise zu verschließen.

2. Maschine nach dem vorhergehenden Anspruch, **dadurch gekennzeichnet, dass** ein elektrisches Verbindungsorgan (90) eingerichtet ist, um es zu erlauben, zwei Nullpunkte der Wicklung des Stators elektrisch zu verbinden, wobei dieses elektrische Verbindungsorgan mindestens ein elektrisch leitendes Element (91) umfasst, das teilweise insbesondere durch Überformen in einem elektrisch isolierenden Material (92) eingelassen ist, wobei das Verbindungsorgan eine Belüftungsöffnung (49) des Lagers mindestens teilweise verschließt.

3. Maschine nach einem der vorhergehenden Ansprüche, **dadurch gekennzeichnet, dass** das Isolationsorgan mindestens eine Lasche (72) umfasst, die sich mindestens teilweise durch die Belüftungsöffnung (49) des Lagers erstreckt und eingerichtet ist, um eine eventuelle Berührung zwischen dem Lager und dem Ende des Leiters, der einen Nullpunkt bildet, zu verhindern, und dass das Isolationsorgan im Wesentlichen ringförmig ist.

4. Maschine nach dem vorhergehenden Anspruch, **dadurch gekennzeichnet, dass** das Isolationsorgan ebenso viele Isolationslaschen (72) wie Nullpunkte der Wicklung umfasst, wobei diese Anzahl zum Beispiel gleich sieben ist.

5. Maschine nach einem der beiden vorhergehenden Ansprüche, **dadurch gekennzeichnet, dass** die Isolationslasche (72) eine im Wesentlichen halb zylindrische Basis (74) umfasst, die an eine flache Seite des Isolationsorgans, vorzugsweise in Bezug zu dieser flachen Seite (75) geneigt anschließt, indem sie einen Winkel bildet, der vorteilhafterweise nicht gleich null ist.

6. Maschine nach einem der vorhergehenden Ansprüche, **dadurch gekennzeichnet, dass** das Isolationsorgan mindestens eine Kerbe (76) umfasst, die eingerichtet ist, um ein Leiterende, das einen Phasenausgang bildet, aufzunehmen, wobei diese Kerbe insbesondere auf einem Außenumfang (77) des Isolationsorgans offen ist.

7. Maschine nach einem der vorhergehenden Ansprüche, **dadurch gekennzeichnet, dass** das Isolationsorgan mindestens eine Einrastpratze (80) umfasst, die eingerichtet ist, um das Befestigen dieses Isolationsorgans auf dem Lager zu erlauben.

8. Maschine nach einem der vorhergehenden Ansprüche, **dadurch gekennzeichnet, dass** sie mindestens eine elektronische Einheit, die einen Wärmeableiter, der mit Rippen (82) versehen ist, umfasst, und dass das Isolationsorgan mindestens eine Nut umfasst, in die eine Rippe des Wärmeableiters mindestens teilweise eingreifen kann.

9. Maschine nach einem der vorhergehenden Ansprüche, **dadurch gekennzeichnet, dass** das elektrische Anschlussorgan eine Vielzahl leitender Elemente (91) umfasst, die jeweils im Wesentlichen eine U-Form aufweisen, wobei mindestens zwei dieser benachbarten leitenden Elemente einen Raum (93) für das Einfügen eines Endes eines Leiters, der einen elektrischen Nullpunkt der Wicklung bildet, bilden.

10. Maschine nach dem vorhergehenden Anspruch, **dadurch gekennzeichnet, dass** das Ende (95) des Leiters, der einen elektrischen Nullpunkt der Wicklung bildet, an die benachbarten leitenden Elemente des elektrischen Anschlussorgans geschweißt, insbesondere widerstandsschweißgelötet oder lichtbogengelötet oder weichgelötet oder lasergelötet, ist.

11. Maschine nach einem der vorhergehenden Ansprüche, **dadurch gekennzeichnet, dass** das elektrische Anschlussorgan (90) mindestens einen Schlitz (100) umfasst, der insbesondere auf einem Innenumfang (101) dieses Anschlussorgans mündet, wobei dieser Schlitz eingerichtet ist, um mindestens teilweise das Leiterende, das einen elektrischen Nullpunkt der Wicklung bildet, aufzunehmen.

12. Maschine nach dem vorhergehenden Anspruch, wobei das Anschlussorgan einen Innenumfang aufweist, der im Wesentlichen kreisförmig ist, **dadurch gekennzeichnet, dass** der Schlitz (100) mit einem Durchmesser des Anschlussorgans einen Winkel (A) nicht gleich null bildet.

13. Maschine nach einem der vorhergehenden Ansprüche, **dadurch gekennzeichnet, dass** das elektrische Anschlussorgan mindestens eine Öffnung (104) umfasst, die insbesondere in einem elektrisch isolierenden Kranz hergestellt ist, der eingerichtet ist, um das Durchgehen eines Abschnitts eines elektrischen Leiters der Statorwicklung zu erlauben, wobei dieser Leiterabschnitt vorteilhafterweise einen Phaseneingang oder einen Phasenausgang der Statorwicklung bildet.

## Claims

1. Rotating electrical machine (1), notably an alternator or an alternator-starter for a motor vehicle, comprising:
- at least one bearing (48) provided with at least one opening (49) emerging outside the bearing,
- a stator (16) comprising an electrical winding (18), this winding comprising a plurality of electrical conductors and at least one of these conductors comprising an end (95) forming an electrical neutral point of the winding,
- an electrical insulation member (70) arranged to prevent any contact between the bearing (48) and said neutral point-forming conductor end, **characterized in that**, this insulation member extending at least partially through the opening of the bearing and being at least partially outside the bearing, this electrical insulation member further being arranged to be at least partially bearing on an outer surface (71) of the plate of the bearing,
- the insulation member (70) is arranged to plug at least partially, using a radially protruding portion (79), at least one aeration opening (49), notably a plurality of openings, of the bearing.

2. Machine according to the preceding claim, **characterized in that**, an electrical connection member (90) arranged to make it possible to electrically link two neutral points of the winding of the stator, this electrical connection member comprising at least one electrically conductive element (91) partially embedded, notably by overmoulding, in an electrically insulating material (92), the connection member at least partially plugs an aeration opening (49) of the bearing.

3. Machine according to either of the preceding claims, **characterized in that** the insulation member comprises at least one tongue (72) extending at least partially through the aeration opening (49) of the bearing and arranged to prevent any contact between the bearing and said neutral point-forming conductor end and **in that** the insulation member is substantially annular.

4. Machine according to the preceding claim, **characterized in that** the insulation member comprises as many insulation tongues (72) as there are neutral points of the winding, this number being for example equal to 7.

5. Machine according to one of the two preceding claims, **characterized in that** the insulation tongue (72) comprises a substantially semi-cylindrical base (74) connecting to a planar face of the insulation member, preferably inclined relative to this planar face (75) by forming an advantageously non-zero angle.

6. Machine according to any one of the preceding claims, **characterized in that** the insulation member comprises at least one notch (76) arranged to receive a phase output-forming conductor end, this notch being notably open on an outer perimeter (77) of the insulation member.

7. Machine according to any one of the preceding claims, **characterized in that** the insulation member comprises at least one snap-fitting tab (80) arranged to allow this insulation member to be fixed onto the bearing.

8. Machine according to any one of the preceding claims, **characterized in that** it comprises at least one electronic unit equipped with a heat sink provided with fins (82), and the insulation member comprises at least one groove making it possible to at least partially fit a fin of the heat sink therein.

9. Machine according to one of the preceding claims, **characterized in that** the electrical connection member comprises a plurality of conductor elements (91), each substantially U-shaped, at least two of these adjacent conductor elements forming a space (93) for the insertion of a conductor end forming an electrical neutral point of the winding.

10. Machine according to the preceding claim, **characterized in that** the conductor end (95) forming an electrical neutral point of the winding is welded, notably by resistance or electrical arc braze welding or by soft soldering or by laser, to the adjacent conductor elements of the electrical connection member.

11. Machine according to any one of the preceding claims, **characterized in that** the electrical connection member (90) comprises at least one slit (100), emerging notably on an inner perimeter (101) of this connection member, this slit being arranged to at least partially receive the conductor end forming an electrical neutral point of the winding.

12. Machine according to the preceding claim, the connection member having a substantially circular inner perimeter, **characterized in that** said slit (100) forms with a diameter of the connection member a non-zero angle (A).

13. Machine according to any one of the preceding claims, **characterized in that** the electrical connection member comprises at least one orifice (104), notably produced in an electrically insulating crown ring, arranged to allow the passage of a portion of electrical conductor of the stator winding, this conductor portion advantageously forming a phase input or output of the stator winding.
